# EUROPÄISCHE PATENTANMELDUNG

(11) **EP 2 107 655 A2**
(43) Veröffentlichungstag der Anmeldung: **07.10.2009**
(21) Anmeldenummer: 09100213.9
(22) Anmeldetag: 31.03.2009
(51) Int. Cl.: H02G 3/04

(54) **Kabelhalter**

(30) Priorität: 01.04.2008 DE 102008016631
(71) Anmelder: BSH Bosch und Siemens Hausgeräte GmbH, 81739 München (DE)
(72) Erfinder: Aninger, Franz, 89435 Finningen (DE); Hotz, Dieter, 89561 Dischingen (DE); Kücük, Cengiz, 89428 Syrgenstein (DE); Mesarosch, Christian, 86159 Augsburg (DE); Sancho, Pedro, CP.-50012 Zaragoza (ES); Wagner, Sebastian, 89353 Glött (DE)

(57) **Zusammenfassung**

Die Erfindung betrifft einen Kabelhalter (19) für wenigstens ein Kabel (17), insbesondere für elektrische Leitungen oder Glasfaserkabel, wenigstens aufweisend einen Führungsabschnitt (21, 23) zum Führen des wenigstens einen Kabels (17). Erfindungsgemäß ist vorgesehen, dass der wenigstens eine Führungsabschnitt (21, 23) für eine Richtungsänderung des Verlaufs des wenigstens einen Kabels (17) verschwenkbar ist.

## Beschreibung

Die Erfindung betrifft einen Kabelhalter nach dem Oberbegriff des Patentanspruches 1.

Hausgeräte weisen eine Vielzahl elektrischer Bauteile auf, die über Stromversorgungskabel mit elektrischem Strom versorgt oder mittels Steuerleitungen angesteuert werden. Hierzu kann es erforderlich sein, Kabel über eine oder mehrere Gehäusekanten des elektrischen Bauteils zu verlegen.

Um das Verlegen der Stromversorgungskabel zu vereinfachen, ist es bekannt, Kabelhalter zu verwenden, die zumindest zwei zueinander abgewinkelte Führungsabschnitte aufweisen, die an die Außenkontur des elektrischen Bauteils angepasst sind. Der Kabelhalter kann separat vom Haushaltsgerät mit den jeweiligen Kabeln bestückt und anschließend in das Haushaltsgerät eingebaut werden. Mittels der zueinander abgewinkelten Führungsabschnitte des Kabelhalters können in einfacher Weise Kabel um Gehäusekanten des elektrischen Bauteils verlegt werden.

Der Kabelhalter mit seinen beiden Führungsabschnitten ist üblicherweise ein vorprofiliertes, starres Bauteil, das in Einbaulage mit seinen abgewinkelten Führungsabschnitten in Anlage mit dem elektrischen Bauteil ist.

Das Bestücken eines solchen Kabelhalters mit Stromversorgungskabeln ist aufgrund der zueinander abgewinkelten Führungsabschnitte nach wie vor montagetechnisch aufwendig. Zusätzlich ist das derart vorprofilierte Kabelhalter insgesamt sperrig und daher nur bauraumintensiv zu lagern und zu verpacken.

Die Aufgabe der Erfindung besteht darin, einen Kabelhalter bereitzustellen, bei dem das Verlegen von Kabeln, insbesondere in einem Hausgerät vereinfacht ist.

Die Aufgabe der Erfindung ist durch die Merkmale des Patentanspruches 1 gelöst. Vorteilhafte Weiterbildungen der Erfindung sind in den jeweiligen Unteransprüchen offenbart.

Die Erfindung geht aus von einem Kabelhalter für wenigstens ein Kabel, insbesondere für elektrische Leitungen oder Glasfaserkabel, wenigstens aufweisend einen Führungsabschnitte zum Führen des wenigstens einen Kabels.

Gemäß dem kennzeichnenden Teil des Patentanspruches 1 ist der wenigstens eine Führungsabschnitte des Kabelhalters nicht starr, sondern verschwenkbar am Kabelhalter angeordnet. Der eine oder vorzugsweise zwei Führungsabschnitte des Kabelhalters können daher für ein montagetechnisch einfaches Bestücken der Stromversorgungskabel zueinander ausgerichtet in einer gemeinsamen Montageebene angeordnet werden, bei der die beiden Führungsabschnitte einen Winkel von 180° einschließen. Beim Bestücken sind daher die Kabel nicht montagetechnisch aufwendig um Kanten herum zu führen. Außerdem kann der Kabelhalter für eine bauraumreduzierte Lagerung in eine kompakte Verpackungslage verstellt werden. In der Verpackungslage können beispielhaft beide Führungsabschnitte seitlich aneinander liegen, das heißt, dass ein Winkel zwischen beiden Führungsabschnitten bei Null liegt. Erst bei der Endmontage können die beiden Führungsabschnitte des Kabelhalters in ihre zueinander abgewinkelte Einbaulage verbracht werden.

Für eine einfache Handhabung des Kabelhalters können seine beiden Führungsabschnitte über ein Gelenk, bspw. einen Scharnierbereich, insbesondere ein Filmscharnier, miteinander in Verbindung sein. In diesem Fall können die Führungsabschnitte in Abhängigkeit vom jeweiligen Montageschritt in eine Einbaulage oder eine Bestückungslage aufgeklappt werden oder alternativ in eine Verpackungslage zusammengeklappt werden.

Bevorzugt können die beiden Führungsabschnitte des Kabelhalters in ihrer Einbaulage unmittelbar konturangepasst am elektrischen Bauteil des Haushaltsgerätes positioniert werden. Montagetechnisch günstig ist hierbei eine werkzeugfrei erfolgende Rastverbindung zwischen den Führungsabschnitten und dem elektrischen Bauteil.

Bevorzugt können die beiden, gegeneinander verstellbaren Führungsabschnitte des Kabelhalters in ihrer Verpackungslage vollständig zusammengeklappt sein, so dass beide Führungsabschnitte mit ihren Längsseiten in Anlage zueinander sind. In diesem Fall kann zumindest eines der oben erwähnten Rastelemente in Doppelfunktion nicht nur zur Rastverbindung mit dem elektrischen Bauteil, sondern zugleich auch zur Sicherung am benachbarten Führungsabschnitt dienen und entsprechend mit diesem in Rasteingriff sein.

In einer besonderen Ausführungsform kann der Kabelhalter zur Anwendung in einem Hausgerät, insbesondere einem wasserführenden Haushaltsgerät wie z. B. einer Geschirrspül- oder Waschmaschine angepasst sein. Eine Geschirrspülmaschine weist üblicherweise in ihrer Gerätetür am Türinnenblechteil ein Gehäuse einer Zugabeeinrichtung auf, die ein elektrisches Bauteil im Sinne der Erfindung darstellt. Die Zugabeeinrichtung ist bekanntermaßen mit elektrischen Betätigungselementen, etwa einer Magnetspule sowie einer elektrischen Klarspülanzeige, versehen. Der Kabelhalter kann über die erwähnten Rastelemente in Einbaulage am Gehäuse der Zugabeeinrichtung gehaltert sein.

Die Gerätetür der Geschirrspülmaschine kann mit einem, dem Spülbehälter zugewandten Türinnenblechteil ausgeführt sein, an dessen Außenseite ein Türaußenteil, etwa eine geschlossene Frontblende oder eine Möbelplatte, vorgesehen ist. Bei der werksseitigen Montage der Gerätetür wird zunächst das frontseitig noch offene, wannenförmige Türinnenblechteil über seitliche Scharnierhebel an der Geschirrspülmaschine angelenkt. Um in diesem Montagezustand eine Schwenkbetätigung des an der Geschirrspülmaschine angelenkten Türinnenblechteils zu vereinfachen, kann einer der Führungsabschnitte des Kabelhalters mit einem Handgriff ausgeführt sein. Der Handgriff kann eine vom Führungsabschnitt hochgezogene Griffleiste sein.

Für eine sichere Betätigung des am Führungsabschnitt gebildeten Handgriffes müssen die Verrastungen des Kabelfhalters am Gehäuse der Zugabeeinrichtung stabil genug ausgeführt sein. Bevorzugt ist es deshalb, wenn zusätzlich zu den Verrastungen am Gehäuse der Zugabeeinrichtung zumindest ein Führungsabschnitt des Kalbelhalters zusätzlich auch unmittelbar am Türinnenblech der Gerätetür gekoppelt ist. Zugkräfte, die beim Betätigen des Handgriffes auf den Kabelhalter ausgeübt werden, können daher zuverlässig vom Türinnenblech aufgenommen werden.

Fertigungstechnisch bevorzugt ist es, wenn die Führungsabschnitte zusammen mit dem Scharnierbereich und dem Rastelementen materialeinheitlich und/oder einstückig ausgebildet sind. In diesem Fall kann der Kabelhalter fertigungstechnisch einfach als Spritzgussteil hergestellt werden. Der Kabelhalter kann insbesondere bei einem Winkel von 180° zwischen den beiden Führungsabschnitten vorteilhaft mit einfachen Formwerkzeugen ohne zusätzliche Schiebekomponenten hergestellt werden.

Ferner gehören zur Erfindung ein Hausgerät, wenigstens einen erfindungsgemäßen Kabelhalter aufweisend sowie ein Verfahren zur Montage eines derartigen Haushaltsgeräts.

Nachfolgend ist ein Ausführungsbeispiel der Erfindung anhand der beigefügten Figuren gezeigt.

### Es zeigen:

- Fig. 1: in einer schematischen Perspektivdarstellung eine Geschirrspülmaschine, bei deren Gerätetür ein außenseitiges Frontelement entfernt ist;
- Fig. 2: in einer perspektivischen Detailansicht einen Montageschritt zur Halterung des Kabelhalters am Gehäuse der Zugabeeinrichtung der Geschirrspülmaschine;
- Fig. 3: der Kabelhalter in Alleinstellung;
- Fig. 4: der Kabelhalter nach erfolgter Bestückung mit Stromversorgungskabeln; und
- Fig. 5: der Kabelhalter in einer Verpackungslage.

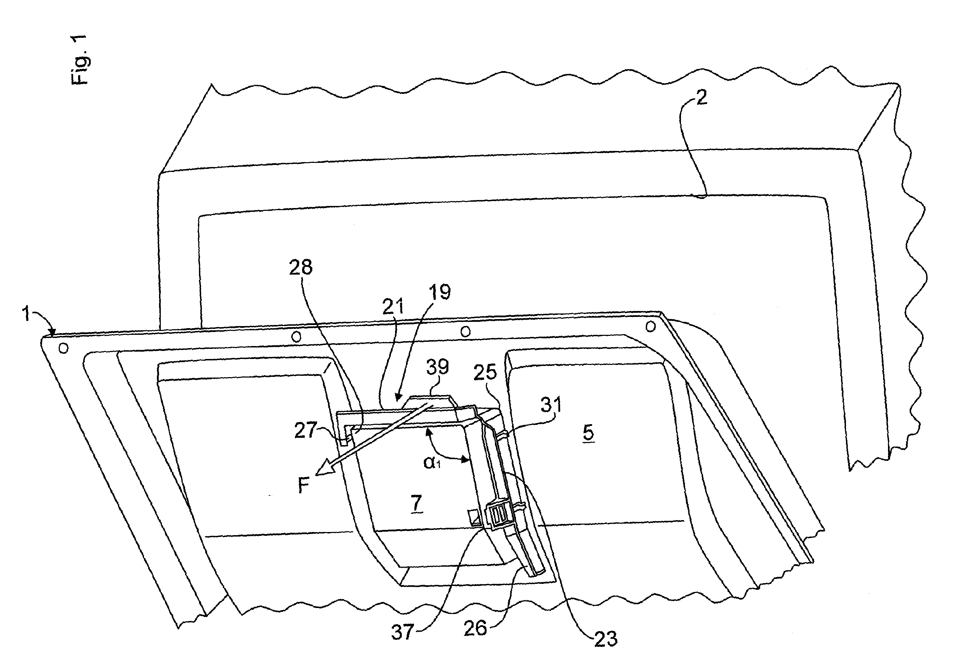

In der Fig. 1 ist eine noch nicht fertig montierte Geschirrspülmaschine mit einer Gerätetür 1 gezeigt, die eine frontseitige Beschickungsöffnung eines Spülbehälters 2 der Geschirrspülmaschine öffnet oder schließt. Diese ist in bekannter Weise bodenseitig um eine horizontale Drehachse schwenkbar an der Geschirrspülmaschine angelenkt. Die Gerätetür 1 weist in üblicher Weise im fertig montierten Zustand ein Türinnenblechteil 5 sowie ein daran montiertes äußeres Türelement, etwa eine Frontblende oder eine Möbelplatte, auf. In der Fig. 1 ist dieses Türaußenelement aus Gründen der Übersichtlichkeit weggelassen, so dass das Türinnenblechteil 5 freigelegt ist.

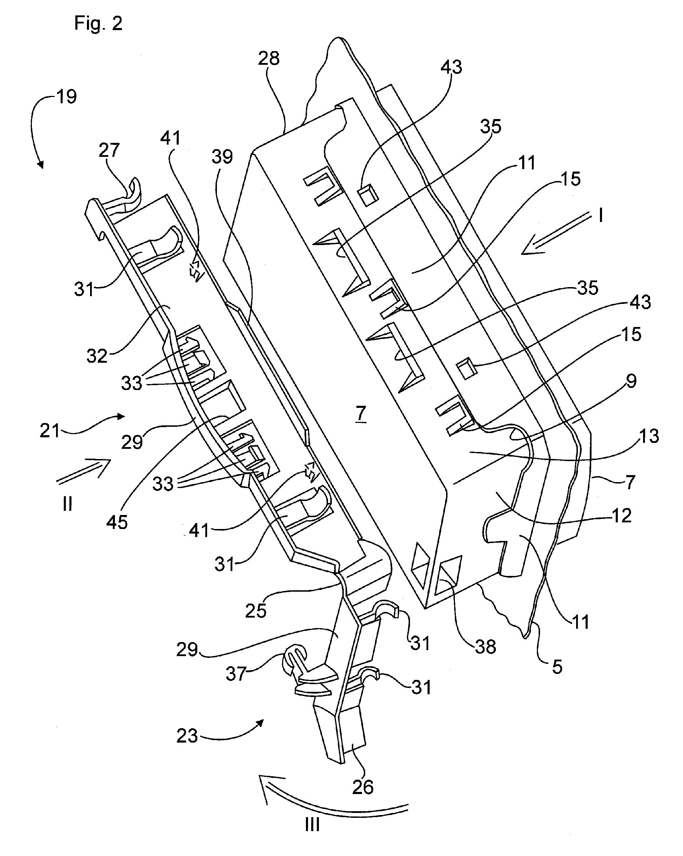

Wie aus der Fig. 1 hervorgeht, ist in der Gerätetür 1 eine Zugabeeinrichtung 7 zum Dosieren eines Reinigungsmittels integriert. Zur Halterung der Zugabeeinrichtung 7 weist das Türinnenblechteil 5 gemäß der Fig. 2 eine in etwa mittige Montageöffnung 9 auf, von deren Rändern auf der vom Spülbehälter 2 abgewandten Seite Befestigungsflansche 11 abragen. Die Zugabeeinrichtung 7 wird gemäß der Fig. 1 in einer Montagerichtung I in die Montageöffnung 9 eingeschoben, bis die an den Randseiten 12, 13 der Zugabeeinrichtung 7 vorgesehenen Rastvorsprünge 15 die Befestigungsflansche 11 hintergreifen, wie es in der Fig. 2 gezeigt ist.

Zur Dosierung des Reinigungsmittels während eines Spülvorganges wird die Zugabeeinrichtung 7 von einer, ebenfalls in der Gerätetür 1 integrierten elektronischen Steuereinrichtung angesteuert. Die Steuereinrichtung ist außerdem mit einer in der Zugabeeinrichtung 7 integrierten elektronischen Klarspülanzeige in Signalverbindung. Für eine einwandfreie, genau definierte Kabelführung zwischen der Steuereinrichtung und der Zugabeeinrichtung 7 sind die Stromversorgungskabel 17 in einem Kabelführungselement 19 gehalten, das in der Fig. 1 in seiner Einbaulage gezeigt ist. Das Kabelführungselement 19 weist gemäß der Fig. 1 zwei zueinander um einen Winkel α₁ von 90° abgewinkelte Führungsabschnitte 21, 23 auf. Diese umgreifen ebenfalls zueinander rechtwinklige vertikale und horizontale Randseiten 12, 13 der Zugabeeinrichtung 7. Mittels des Kabelhalters 19 erfolgt eine Kabelführung entlang der beiden Randseiten 12, 13 bis auf Höhe der jeweiligen, nicht gezeigten Anschlussbuchsen der Zugabeeinrichtung 7.

Der Kabelhalter 19 ist hier ein einstückig sowie materialeinheitlich ausgebildetes Kunststoffspritzgussteil. Die beiden leistenförmigen Führungsabschnitte 21, 23 sind über ein Filmscharnier 25 schwenkbar miteinander in Verbindung und umrahmen die Zugabeeinrichtung 7 in etwa zur Hälfte. Dabei erstreckt sich der in der Fig. 1 vertikal eingebaute Führungsabschnitt 23 über die untere Gehäusekante der Zugabeeinrichtung 7 hinaus nach unten. Die Kabel 17 werden daher schlaufenartig um das untere Ende 26 des Führungsabschnittes 23 und gegenläufig wieder zurück zur entsprechenden Anschlussbuchse der Zugabeeinrichtung 7 geführt. Die so gebildeten Kabel-Schlaufen ermöglichen ein Abtropfen von, gegebenenfalls an den Kabeln 17 entlang laufenden Flüssigkeitstropfen.

Der in Einbaulage horizontal liegende Führungsabschnitt 21 des Kabelhalters 19 umgreift demgegenüber mit seinem abgewinkelten freien Ende 27 die Gehäusekante 28. Am freien Ende 27 des horizontalen Führungsabschnittes 21 ist gemäß der Fig. 2 eine elastisch federnde Lasche vorgesehen, die in Einbaulage gegen eine vertikale Randseite der Zugabeeinrichtung drückt.

Zur seitlichen Abschirmung der Kabel 17 weisen die beiden Führungsabschnitte 21, 23 des Kabelhalters 19 frontseitige Begrenzungswände 29 auf. Außerdem sind an jedem der Führungsabschnitte 21, 23 Befestigungsclips 31 vorgesehen, die die Kabel 17 am Boden 32 der Führungsabschnitte 21, 23 des Kabelhalters 19 fixieren.

Der horizontale Führungsabschnitt 21 des Kabelhalters 19 weist gemäß der Fig. 2 weiterhin elastisch federnde Rasthaken 33 auf. Diese sind entgegen der Montagerichtung I horizontal ausgerichtet und unterhalb des Bodens 32 des Führungsabschnittes 21 an der frontseitigen Begrenzungswand 29 angeformt.

Zur Montage des Kabelhalters 19 auf der Zugabeeinrichtung 7 wird gemäß der Fig. 2 zunächst dessen horizontaler Führungsabschnitt 21 in der horizontalen Montagerichtung II auf die obere Randseite 13 der Zugabeeinrichtung 7 geschoben. Dabei werden die horizontal ausgerichteten Rasthaken 33 durch entsprechende Rastöffnungen 35 der Zugabeeinrichtung 7 geführt, bis die Rasthaken 33 die korrespondierenden Rastöffnungen 35 hintergreifen. Nach erfolgter Verrastung des horizontalen Führungsabschnittes 21 mit der Zugabeeinrichtung 7 wird der Führungsabschnitt 23 um das Filmscharnier 25 in der Montagerichtung III im Gegenuhrzeigersinn in seine vertikale Einbaulage geschwenkt. In der Einbaulage ist ein am vertikalen Führungsabschnitt 23 vorgesehener Rastzapfen 37 in Rastverbindung mit einer korrespondierenden, seitlich an der Zugabeeinrichtung 7 vorgesehenen Rastaufnahme 38.

Für eine einfache Handhabung der gemäß der Fig. 1 an der Geschirrspülmaschine montierten Gerätetür 1 ist am Boden 32 des Führungsabschnittes 21 eine Griffleiste 39 angeformt. Die Griffleiste 39 erstreckt sich in etwa mittig entlang des Führungsabschnittes 21 auf der, der frontseitigen Begrenzungswand 29 gegenüberliegenden Seite. Zur Schwenkbetätigung des bereits am Gehäuse der Geschirrspülmaschine angelenkten Türinnenblechteils 5 wird die Griffleiste 39 vom Monteur hintergriffen und mit der in der Fig. 1 angedeuteten Betätigungskraft F beaufschlagt. Die zwischen den Rasthaken 33 und den Rastöffnungen 35 der Zugabeeinrichtung 7 bereitgestellte obere Rastverbindung ist entsprechend zu dimensionieren, um den Kabelhalter 19 bei Beaufschlagung mit der Betätigungskraft F stabil an der Zugabeeinrichtung 7 zu halten. Zur Verstärkung dieser oberen Rastverbindung können am Boden 32 des Führungsabschnittes 21 zusätzliche Rastvorsprünge 41 vorgesehen werden, wie sie in der Fig. 2 angedeutet sind. Beim Aufschieben des Kabelhalters 19 in der Montagerichtung II auf die Zugabeeinrichtung 7 können die Rastvorsprünge 41 zusammen mit korrespondierenden Rastöffnungen 43 im Befestigungsflansch 11 des Türinnenblechteils 5 eine zusätzliche Verrastung bereitstellen. In diesem Fall ist der Kabelhalter 19 nicht nur mit der Zugabeeinrichtung 7, sondern auch mit dem Türinnenblechteil 5 formschlüssig in Verbindung.

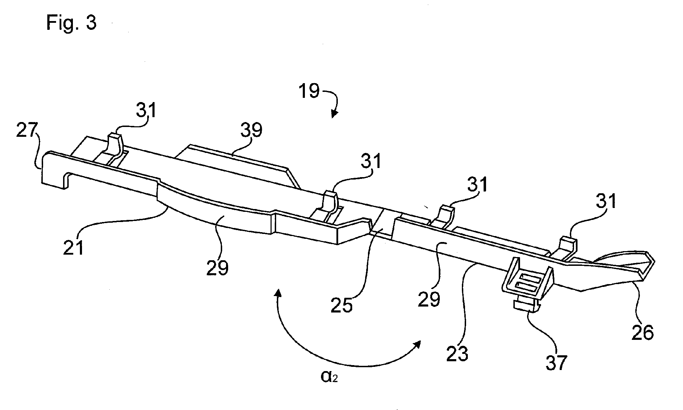

Wie bereits erwähnt, wird der Kabelhalter 19 im Kunststoffspritzgussverfahren hergestellt. Der Kabelhalter 19 wird in einer Spritzgusskammer mit auseinander geklappten, in Längsrichtung zueinander ausgerichteten Führungsabschnitten 21, 23 gefertigt, wie sie in der Fig. 3 gezeigt sind. Der Winkel α₂ zwischen beiden Führungsabschnitten 21, 23 liegt in der gezeigten Herstellungslage bei 180°. Aufgrund der aufgeklappten Lage der beiden Führungsabschnitte 21, 23 können einfache Spritzgussformwerkzeuge eingesetzt werden, ohne dass zusätzliche Schiebekomponenten erforderlich sind.

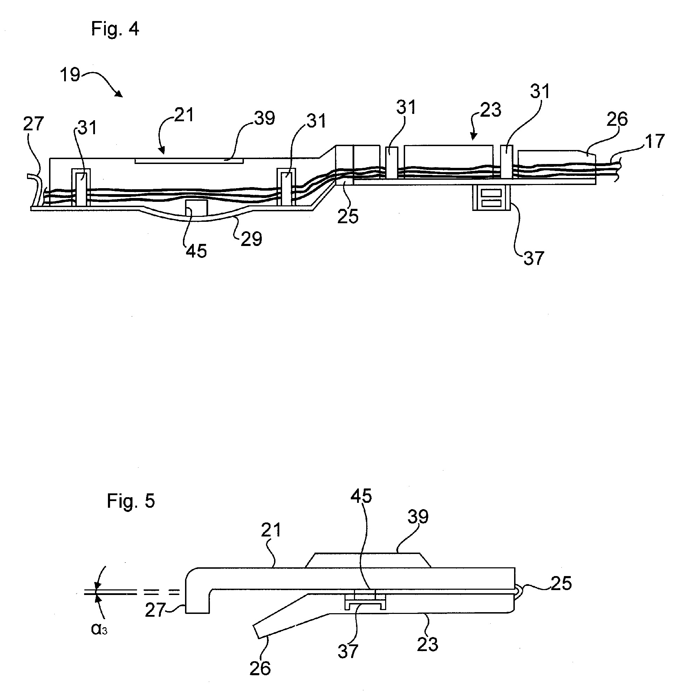

In der, in der Fig. 3 gezeigten, in Längsrichtung ausgerichteten Herstellungslage der Führungsabschnitte 21, 23 erfolgt auch die Vormontage der Stromversorgungskabel 17 am Kabelführungselement 19, wie es in der Fig. 4 gezeigt ist. Hierzu werden die Kabel 17 zwischen den Befestigungsclips 31 und dem Boden 32 der Führungsabschnitte 21, 23 geklemmt. Die Vormontage findet in einer gemeinsamen Montageebene statt, ohne dass die Kabel 17 montagetechnisch aufwendig um Kanten zwischen zueinander abgewinkelten Führungsabschnitten 21, 23 montiert werden müssten. Die in der Fig. 4 gezeigte Vormontagelage des Kabelhalters 19 ist somit identisch mit seiner in der Fig. 3 gezeigten Herstellungslage.

Nach erfolgter Vormontage kann der mit den Kabeln 17 bestückte Kabelhalter 19 um das Filmscharnier 25 in eine Verpackungsposition verstellt werden, wie sie in der Fig. 5 gezeigt ist. In der gezeigten Verpackungsposition sind die beiden Führungsabschnitte 21, 23 vollständig zusammengeklappt. Der Kabelhalter 19 nimmt somit eine äußerst kompakte, geschlossene Geometrie ein, bei der der Winkel α₃ zwischen den beiden Führungsabschnitten 21, 23 auf Null reduziert ist. Derart zusammengeklappte Kabelhalter 19 können in großer Anzahl raumgünstig verpackt bzw. gelagert werden.

Zur Sicherung der Verpackungsposition greift der Rastzapfen 37 des in Einbaulage vertikalen Führungsabschnittes 23 in eine entsprechende Rastaufnahme 45, die im Boden 32 des in Einbaulage horizontalen Führungsabschnittes 21 vorgesehen ist. Der Rastzapfen 37 dient somit in Doppelfunktion in der Einbaulage zur seitlichen Verrastung mit der Zugabeeinrichtung 7 sowie in Verpackungslage zur Verrastung mit dem Führungsabschnitt 21.

### BEZUGSZEICHENLISTE

- 1: Gerätetür
- 2: Spülbehälter
- 3: Drehachse
- 5: Türinnenblechteil
- 7: Zugabeeinrichtung
- 9: Montageöffnung
- 11: Befestigungsflansch
- 12: Randseite der Zugabeeinrichtung 7
- 13: Randseite der Zugabeeinrichtung 7
- 15: Rastvorsprünge
- 17: Stromversorgungskabel
- 19: Kabelhalter
- 21, 23: Führungsabschnitte
- 25: Gelenk
- 26, 27: freie Enden der Führungsabschnitte 21, 23
- 29: Begrenzungswände
- 31: Befestigungsclips
- 32: Boden
- 33: Rasthaken
- 35: Rastöffnungen
- 37: Rastzapfen
- 38: Rastaufnahme
- 39: Handgriff, Griffleiste
- 41: zusätzliche Rastvorsprünge
- 43: Rastöffnungen
- 45: Rastaufnahme
- I, II, III: Montagerichtungen
- F: Betätigungskraft
- α: Winkel, der zwischen den beiden Führungsabschnitten 21, 23 des Kabelführungselements 19 eingeschlossen ist

## Patentansprüche

1. Kabelhalter (19) für wenigstens ein Kabel (17), insbesondere für elektrische Leitungen oder Glasfaserkabel, wenigstens aufweisend einen Führungsabschnitt (21, 23) zum Führen des wenigstens einen Kabels (17), **dadurch gekennzeichnet, dass** der wenigstens eine Führungsabschnitt (21, 23) wenigstens abschnittsweise für eine Richtungsänderung des Verlaufs des wenigstens einen Kabels (17) verschwenkbar ist.

2. Kabelhalter (19) nach Anspruch 1, **dadurch gekennzeichnet, dass** der wenigstens einen Führungsabschnitt (21, 23) ein Gelenk, insbesondere ein Filmscharnier (25), zur Richtungsänderung des Verlaufs des Kabels (17) aufweist.

3. Kabelhalter (19) nach Anspruch 1 oder 2, **dadurch gekennzeichnet, dass** der wenigstens eine Führungsabschnitte (21, 23) mit einem Bauteil (7) eines Hausgeräts lösbar verbunden sind, insbesondere mittels einer Rastverbindung.

4. Kabelhalter (19) nach Anspruch 1, 2 oder 3, **dadurch gekennzeichnet, dass** durch Bewegen wenigstens eines Abschnitts des Führungsabschnitts (21, 23) in eine Endlage der Kabelhalter (19) in eine Verpackungslage bringbar ist.

5. Kabelhalter (19) nach Anspruch 4, **dadurch gekennzeichnet, dass** in der Endlage die Führungsabschnitte (21, 23) im Wesentlichen parallel zueinander verlaufen.

6. Kabelhalter (19) nach Anspruch 5, **dadurch gekennzeichnet, dass** der wenigstens eine Führungsabschnitt (21, 23) lösbar mit einem elektrischen Bauteil (7) verbunden ist.

7. Kabelhalter (19) nach einem der vorhergehenden Ansprüche, **dadurch gekennzeichnet, dass** die Führungsabschnitte (21, 23), das Gelenk (25) und/oder Rastelemente (33, 37, 41) materialeinheitlich und/oder einstückig ausgebildet sind.

8. Kabelhalter (19) nach einem der vorhergehenden Ansprüche, **dadurch gekennzeichnet, dass** der Kabelhalter (19) in einem Spritzgussverfahren hergestellt ist.

9. Kabelhalter (19) nach einem der vorhergehenden Ansprüche, **dadurch gekennzeichnet, dass** der Kabelhalter (19) zwei Führungsabschnitte (21, 23) aufweist.

10. Kabelhalter (19) nach Anspruch 9, **dadurch gekennzeichnet, dass** die beiden Führungsabschnitte (21, 23) in einer Vormontageposition, in der das Kabelführungselement (19) mit Kabeln (17) bestückt wird, in einer im Wesentlichen die Richtung des Verlaufs der Kabel nicht verändernden Position zueinander angeordnet sind.

11. Hausgerät, insbesondere Haushaltsgerät, wenigstens einen Kabelhalter (19) nach einem der vorhergehenden Ansprüche aufweisend.

12. Hausgerät nach Anspruch 11, **dadurch gekennzeichnet, dass** das Hausgerät eine Geschirrspülmaschine mit wenigstens einer Zugabeeinrichtung (7) ist, an der der Kabelhalter (19) gehaltert ist.

13. Hausgerät nach Anspruch 12, **dadurch gekennzeichnet, dass** die Geschirrspülmaschine eine Gerätetür (1) aufweist, an der innenseitig eine Zugabeeinrichtung (7) angeordnet ist,

14. Hausgerät nach Anspruch 12 oder 13, **dadurch gekennzeichnet, dass** einer der Führungsabschnitte (21, 23) mit einem Handgriff (39) zur Schwenkbetätigung (III) der Gerätetür (1) des Hausgeräts ausgeführt ist.

15. Hausgerät nach einem der Anspruch 12 bis 14, **dadurch gekennzeichnet, dass** der erste Führungsabschnitt (21) an einem Türinnenteil (5) der Gerätetür (1) befestigt ist.

16. Verfahren zur Montage eines Haushaltsgeräts, bei dem Kabel (17) in einem Kabelhalter (19), insbesondere nach einem der vorhergehenden Ansprüche, verlegt werden, und in einem ersten Montageschritt die Kabel (17) separat vom Haushaltsgerät am Kabelhalter (19) vormontiert werden.

17. Verfahren nach Anspruch 17, **dadurch gekennzeichnet, dass** eine Vormontage der Kabel (17) im Kabelhalter (19) erfolgt, wobei im Wesentlichen die Richtung des Verlaufs der Kabel (17) nicht verändernd wird.

18. Verfahren nach Anspruch 17 oder 18, **dadurch gekennzeichnet, dass** zur Lagerung wenigstens eine schwenkbarer Führungsabschnitt (21, 23) in eine Endposition gebracht wird, in der die Schwenkbewegung begrenzt ist.

19. Verfahren nach Anspruch 19, **dadurch gekennzeichnet, dass** zur Montage der wenigstens eine schwenkbare Führungsabschnitt (21, 23) in Position zwischen der Endposition und der Position gebracht wird, in im Wesentliche der Verlauf des Kabels nicht verändert wird.
